# EUROPEAN PATENT SPECIFICATION

(11) **EP 3 295 213 B1**
(45) Date of publication and mention of the grant of the patent: **15.04.2020**
(21) Application number: 16720128.4
(22) Date of filing: 03.05.2016
(51) Int. Cl.: G01S 19/40, G01C 21/00, G01C 21/30, G06K 9/62

(54) **IMPROVING THE SPATIAL ACCURACY OF POSITIONS MEASURED BY GLOBAL NAVIGATION SATELLITE SYSTEM RECEIVERS PLACED IN A SPATIAL CONFIGURATION**
VERBESSERUNG DER RÄUMLICHEN GENAUIGKEIT VON POSITIONEN, DIE GEMESSEN WERDEN DURCH GLOBALE NAVIGATIONSSATELLITENSYSTEMEMPFÄNGER IN EINER RÄUMLICHEN KONFIGURATION
AMÉLIORATION DE L'EXACTITUDE SPATIALE DE POSITIONS MESURÉES PAR LES RÉCEPTEURS D'UN SYSTÈME DE SATELLITES DE NAVIGATION GLOBALE PLACÉS DANS UNE CONFIGURATION SPATIALE

(30) Priority: 12.05.2015 EP 15167405
(43) Date of publication of application: 21.03.2018
(73) Proprietor: Signify Holding B.V., 5656 AE Eindhoven (NL)
(72) Inventor: NIEUWLANDS, Eric, Johannus, Hendricus, Cornelis, Maria, 5656 AE Eindhoven (NL)
(74) Representative: Verweij, Petronella Daniëlle
(86) International application number: PCT/EP2016/059911
(87) International publication number: WO 2016/180681

(56) References cited:
- EP-A1- 1 909 231
- WO-A1-2015/022213
- US-A1- 2002 177 950
- US-A1- 2011 257 885

## Description

### FIELD OF THE INVENTION

The present invention generally relates to a method and an apparatus for improving the accuracy of Global Navigation Satellite System (GNSS) receivers which are placed in a spatial configuration. The invention further relates to a computer program product for use in the apparatus.

### BACKGROUND

Global Navigation Satellite Systems allows individual receivers to calculate their approximate positions in three dimensions using signals from a network of satellites and allows individual receivers to determinate a global atomic time to nanosecond accuracy without requiring Internet connectivity or external outputs.

Multiple Global Navigation Satellite Systems exist such as the American Global Positional System (GPS) and the Russian GLObal Navigation Satellite System (GLONASS). Other Global Navigation Satellite Systems are currently (2015) designed or built such as the European Galileo system and the Chinese Beidou-2 or COMPASS system. The problem and invention disclosed herein is applicable to all Global Navigation Satellite Systems. Throughout the application in general the term GNSS receivers is used except when referring to other patent applications specifically aimed at GPS receivers.

Each standalone GNSS receiver is prone to several sources of measurement error such as atmospheric errors, ephemeris errors, clock errors, multipath propagation errors and measurement noise errors.

The Global Positioning System (GPS), designed and operated by the United States Department of Defense, provides localization services anywhere on earth, in all weather conditions. Measurement errors in standalone GPS receivers can be decreased by using, for example, more refined antennas or higher precision receivers. This, however, increases the cost, size and power requirements of the GPS receivers as described in patent application WO2014171999.

Atmospheric errors, ephemeris errors and clock errors, do not only have the largest influence on the measurement error but are also equal within bounded geographic regions. When the error is determined for this bounded geographic region, measurement errors can be corrected as described in patent application WO2014171999.

US 2011/257885 Aldiscloses a method and apparatus for making accuracy improvements to a GPS receiver's navigation solution and integrates a map-matching algorithm with a navigational routing in a geographically-aided position determination algorithm. The disclosed solution used navigation state information such as position, heading direction, velocity, and altitude obtained from sensors such as accelerometers, gyros, magnetic compasses, barometers etc. in combination with cartography information obtained from a map to determine the most probable nearest road/lane the GPS receiver is on.

US 2002/177950 A1 discloses determining an accurate position of a mobile GPS receiver using a received positional signal having relatively low and high frequency noise components corrupting the positional accuracy of the positional signal. A low frequency error associated with a detected turn of the mobile receiver is derived and applied as a low frequency correction factor to positions of the receiver derived after the turn is detected. Resulting corrected positions are applied along with associated high frequency correction factors representative of the high frequency noise component to a predictive Kalman filter to derive predicted positions substantially free of the low and high frequency noise components.

EP 1 909 231 A1 relates to route usage evaluation schemes, usually embodied as road user charging schemes, in which the user pays for road use according to criteria such as motorway use, certain congested zones, and/or charging for certain types of road vehicle. The document discloses a vehicle on-board equipment configured to implement at least one route usage evaluation scheme, including: vehicle position means (or sensor) configured to provide vehicle position data; map storage configured to hold one or more maps; map matching means configured to receive data from the vehicle position section and the map storage and to match the vehicle position data to the map and thereby determine route usage data; and communication means configured to transmit data for route usage evaluation to a back-end system for the or each scheme.

WO2015/022213A1 discloses a pole, such as a street light or a traffic light, which can, for example, break due to being hit by a car or bend due to being exposed to high winds. A system for detecting physical deformation of a pole comprises a signal processor coupled to an antenna arranged to receive a wireless signal. The signal processor determines position data based on the wireless signal. A processor analyzes position data to determine whether there is a variation between first position data relating to a first time period and second position data relating to a subsequent time period. When the pole has been physically deformed between the first and the second time period, the first and second position data will vary and the processor determines that the pole has been physically deformed.

### SUMMARY OF THE INVENTION

Determining the error for a single standalone GNSS receiver that is statically placed is possible. It is an insight of the inventor that in the case of multiple statically placed GNSS receivers in a spatial configuration, determining this errors is problematic as it is not clear if the signal originates from one spot in the spatial configuration or another spot in the spatial configuration.

Therefore, there is a need to determine the error of GNSS receivers statically placed in a spatial configuration that does not depend on a shift determined by a single GNSS receiver.

It is an object of the invention to improve the spatial accuracy of positions measured by Global Navigation Satellite System (GNSS) receivers in a spatial configuration. More particularly, a method disclosed herein relates to determining the difference between the measured position and the planned position of each GNSS receiver in a spatial configuration.

According to a first aspect of the invention, the object is achieved by a method of improving spatial accuracy of positions measured by Global Navigation Satellite System (GNSS) receivers that are placed in a spatial configuration covering an area in which a deviation of a measured position from an actual position of each GNSS receiver is in the same direction, the method comprising: receiving the positions measured by each of the plurality of GNSS receivers in the spatial configuration; obtaining a map of planned positions of each of the plurality of GNSS receivers in the spatial configuration; comparing the spatial configuration of measured positions of the plurality of GNSS receivers with the spatial configuration of planned positions of the plurality of GNSS receivers to identify the difference between the measured positions and the planned positions; and compensating the measured positions for the difference.

The term "spatial configuration" should be understood to refer to any configuration where there are multiple points defined in a space. According to patent application WO2014171999, the combined standard deviation of all errors for which a 1-sigma error is provided is approximately 7,2 meters such that it is more than 99% certain that the actual position of a GPS receiver lies within 20 meters of its actual position. Therefore, the problem presented will not occur if the distance between points in the spatial configuration exceeds 40 meters. The quantity and location of the points can be chosen arbitrarily.

The difference between the measured position and the planned position equals the measurement error when the GNSS receivers are placed on their planned position. In this case, the term difference and the term measurement error both indicate the difference between the actual position and the measured position of the GNSS receiver. In most cases, the GNSS receivers will be placed accurately on their planned positions.

The disclosed method is advantageous over existing methods as it takes the complete spatial configuration of GNSS receivers into account. Measurement errors for all the GNSS receivers in the spatial configuration are, within a bounded spatial region, approximately the same since the atmospheric errors, ephemeris errors and clock errors, the errors that determine the largest part of the measurement error, are equal within bounded spatial regions. Therefore, by observing the complete spatial configuration and looking for the general shift between the spatial configuration measured and the spatial configuration planned, the issue of connecting one GNSS receiver to multiple positions in the spatial configuration is eliminated. The bounded spatial regions are influenced most by the ionospheric errors which depend on solar activity. In general, these errors are stable within an area of several squared kilometers. However, measurements across the Atlantic Ocean in Portugal show that it is possible that the bounded spatial region could have a radius of over 100 kilometers as disclosed in by Monteiro, Luís Sardinha; Moore, Terry and Hill, Chris in the article 'What is the accuracy of DGPS?' in The Journal of Navigation edition 58 of 2005. Note that the smaller the spatial region, the more equal the errors will be.

Although the issue of connecting one GNSS receiver to multiple positions in a spatial configuration does not exist for GNSS receivers placed more than 40 meters from each other, observing the complete spatial configuration may still be advantageous to quickly determine the general shift between the spatial configuration measured and the spatial configuration planned.

In an embodiment, the method of identifying the difference comprises machine performed pattern recognition for determining a match between the spatial configuration of measured positions and the spatial configuration of planned positions and for determining a shift required to cause an overlap of the matching spatial configurations that is indicative of the difference.

Using machine performed pattern recognition is beneficial as this can be done in a quick and effective manner. Hereby enabling the technique presented to quickly analyze the measurement error of large areas containing spatial configurations of GNSS receivers. Note that, in order for the technique to work, large areas might have to be divided into smaller areas wherein the atmospheric errors, ephemeris errors and clock errors are equal.

In an embodiment, the method of identifying the difference comprises: displaying the spatial configuration of measured positions as well as the spatial configuration of planned positions; manually shifting at least one of the spatial configurations to cause an overlap of the spatial configurations on the display and determining the compensation on the basis of the shift of at least one spatial configuration.

Displaying both the planned and measured spatial configuration, enables a user to observe the shift necessary to correct for the measurement errors. This is beneficial as humans can quickly identify the shift between two spatial configurations. Using a simple drag and drop user interface enables the user to manually determine the shift according to the user's own desire. This method is beneficial as it allows a user to have more control over the compensated positions and enables the user to adapt the compensation to its own preferences. The user can for example be assisted by computer software by displaying metrics such as the average initial difference, the average final difference, the direction of the difference and how many points can be compensated using the same difference.

In an embodiment, wherein a map of planned relative positions of the GNSS receivers in the spatial configuration is obtained, the difference between the measured positions and the planned positions is identified based on said map.

The method can also be used to reconstruct the spatial configuration planned without the need for the absolute positions of the planned spatial configuration. This can be used to identify if a GNSS receiver is placed incorrectly.

In an embodiment, wherein a plurality of GNSS receivers is placed on a plurality of objects, the method further comprises: receiving object-specific identifiers; and combining the compensated positions of the GNSS receivers with the object-specific identifiers to determine a compensated position for each object.

For multiple purposes, such as, but not limited to, the placing of tracks for racing, walking or sailing, it can be useful to know the actual position of objects in a spatial configuration. As, the actual positions, in most cases, will coincide with the compensated position, the above embodiment is advantageous.

In an embodiment, wherein an object is controllable, the method further comprises controlling the object based on its compensated position.

When controlling objects that have an effect on their surroundings, it is important to know where these objects reside. In this way, the effect necessary for the surroundings of the objects can be determined. Therefore, it is propitious to be able to control objects based on their compensated position.

In an embodiment, wherein at least one object has at least one sensor, the method further comprises controlling an object based on data originating from the sensor in combination with the compensated positions of the objects.

When controlling objects in specific positions, it can be useful to combine positional information with information from sensors. For example, a presence sensor on a luminaire in a deserted alley can trigger only one luminaire whereas a presence sensor on a luminaire in a busy shopping boulevard can trigger multiple luminaires or even induce a special light effect. Therefore, it is useful to be able to control objects based on their compensated position in combination with information originating from sensors.

In an embodiment, wherein the controllable object is an outdoor luminaire, the method further comprises using the compensated positions of the outdoor luminaires for commissioning purposes.

For the commissioning of outdoor luminaires it is important to know their actual positions. However, when installing a system it is difficult to exactly know which luminaire is placed on which position. The method presented here can provide a solution to this problem. Subsequently, during commissioning all settings can be based on the compensated positions of the outdoor luminaires.

According to a second aspect of the present invention, the object is achieved by an apparatus comprising: a processor, coupled to a plurality of GNSS receivers that are statically placed in a spatial configuration, for receiving positions measured by the GNSS receivers, wherein the processor is configured to: receive the positions measured by each of the plurality of GNSS receivers in the spatial configuration; obtain a map of planned positions of each of the plurality of GNSS receivers in the spatial configuration, to compare the spatial configuration of measured positions measured by the plurality of GNSS receivers with the spatial configuration of planned positions of the plurality of GNSS receivers to identify a difference between the measured positions and the planned positions and to compensate the measured positions for the difference. The advantage of an apparatus as described above is that it can reside in a GNSS receiver itself, in a central network computer and in a portable device such as, but not limited to, a smart phone, tablet or laptop.

In an embodiment, the processor is configured to perform a pattern recognition algorithm for determining a match between the spatial configuration of measured positions and the spatial configuration of planned positions and the processor is configure to determine a shift required to cause an overlap of the matching spatial configurations that is indicative of the difference between the measured positions and the planned positions.

Pattern recognition algorithms allow the computing apparatus described to quickly determine the compensated positions for the GNSS receivers in the spatial configuration without the need of human intervention.

In an embodiment, wherein a plurality of GNSS receivers is placed on a plurality of objects and wherein the processor is coupled to said objects for receiving object specific identifiers, the processor is configured to combine the compensated measured positions of the GNSS receivers with the object-specific identifiers to determine the compensated position for each object.

In an embodiment, wherein the objects are controllable objects and wherein the processor is coupled to the objects for controlling the objects, the processor is configured to control the objects based on their compensated positions.

It is beneficial to know an accurate position of objects and, in the case these objects are controllable objects, it is beneficial to control them based on their actual position.

According to a third aspect of the invention, the object is achieved by a computer program product for improving spatial accuracy of positions measured by Global Navigation Satellite System (GNSS) receivers placed in a spatial configuration, the computer program product downloadable from a communication network and/or stored on a computer readable medium, the computer program product comprising machine readable instructions that, when executed on a computing system, causes the computing system to perform the steps of: processing received positions measured by each of the plurality of GNSS receivers in the spatial configuration, determining a planned position for each GNSS receiver of the plurality of GNSS receivers, comparing the spatial configuration of measured positions of the plurality of GNSS receivers with a spatial configuration of planned positions of the plurality of GNSS receivers to identify the difference between the measured positions and the planned positions and compensating the measured positions for the difference.

In an embodiment, the computer program product is arranged to perform the step of identifying the difference between the measured positions the planned positions of the GNSS receivers using pattern recognition.

In an embodiment, the computer program product is arranged to perform the step of identifying the difference between the measured positions and the planned positions by displaying a spatial configuration of the planned positions and a spatial configuration of the measured positions on a display device, enabling a manually controlled shift of at least one of the spatial configurations to cause an overlap of the spatial configurations, and determining the compensation on the basis of the shift of at least one spatial configuration.

The above described computer product is advantageous as it allows computers to transform into a system that can determine exact positions of GNSS receivers.

### BRIEF DESCRIPTION OF THE DRAWINGS

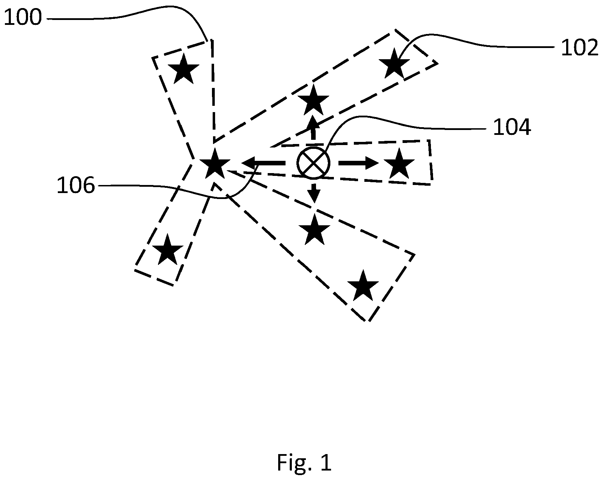

The above, as well as additional objects, features and advantages of the method, apparatus and computer program product, will be better understood through the following illustrative and non-limiting detailed description of embodiments of devices and methods, with reference to the appended drawings Fig. 1 to 4.
Fig. 1 schematically shows a situation where GNSS receivers are placed in a spatial configuration and where the position of only one of the GNSS receivers is measured. The arrows indicate the possible actual positions of the GNSS receiver.
Fig. 2 schematically shows a situation where GNSS receivers are placed in a spatial configuration and where the position of all GNSS receivers in the spatial configuration are measured. The arrows indicate the shift between the measured positions and the actual positions.
Fig. 3 schematically shows a method of improving spatial accuracy of positions measured by Global Navigation Satellite System (GNSS) receivers that are placed in a spatial configuration covering an area in which a deviation of a measured position from an actual position of each GNSS receiver is in the same direction.
Fig. 4 schematically shows two methods for identifying the difference between the measured positions of the GNSS receivers and the actual positions of GNSS receivers.

All the figures are schematic, not necessarily to scale, and generally only show parts which are necessary in order to elucidate the invention, wherein other parts may be omitted or merely suggested.

### DETAILED DESCRIPTION OF EMBODIMENTS

The present invention generally relates to a method and an apparatus for improving the accuracy of GNSS receivers which are placed in a spatial configuration. The invention further relates to a computer program product for use in the apparatus.

Fig. 1 shows a situation where GNSS receivers, depicted as black stars, 102 are placed in a spatial configuration 100 and a position 104 of one of the GNSS receivers is measured. As is known from patent application WO2014171999, the difference between the measured position 104 and the actual position of a corresponding GPS receiver is equal for all GPS receivers within bounded geographic regions. Therefore, it is possible to compensate all measured positions within a bounded geographic region based on the difference measured for one GNSS receivers. When the receivers are placed in a spatial configuration, such as in Fig. 1, it is not possible to determine the difference, shown as black arrows, 106 for a single GNSS as receiver as the measured position of the GNSS receiver can correspond to multiple positions of GNSS receivers.

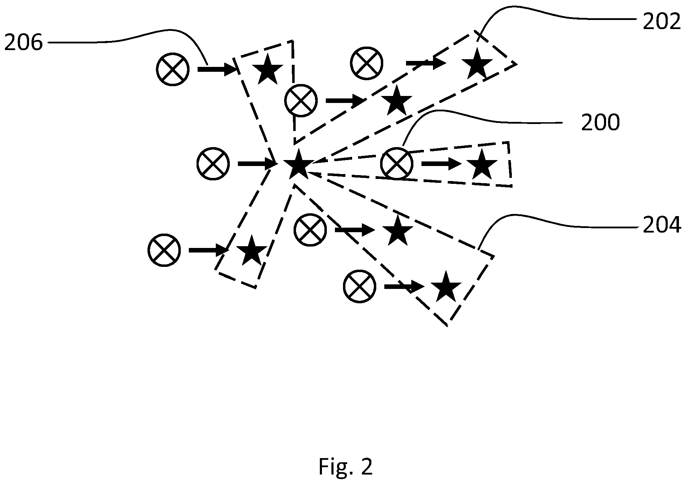

Fig. 2 shows the measured positions, depicted by summing junction signs, 200 of multiple GNSS receivers, depicted by black stars, 202 placed in a spatial configuration 204 covering an area in which a deviation of a measured position from an actual position of each GNSS receiver is in the same direction. Now, it is possible to determine the difference, shown as black arrows, 206 between the measured position and the actual position as the measured spatial configuration and actual configuration can be overlapped. The ambiguity of Fig. 1 is eliminated since there is only one possibility to match the different spatial configurations. An additional advantage is that, by mapping two patterns on top of each other, the difference between the measured and the actual position does not have to be exactly equal. Said difference has to be in the same direction but can vary for different GNSS receivers.

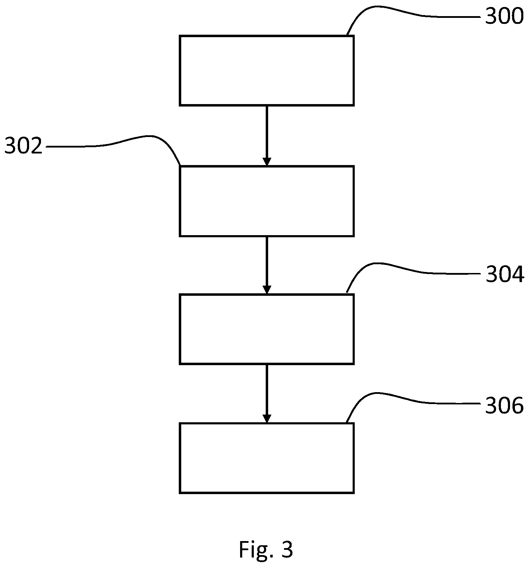

The principle shown in Fig. 2 and explained above can be used by an apparatus comprising a processor coupled to a plurality of GNSS receivers that are statically placed in a spatial configuration in the following way and as shown in Fig. 3.

First, in step 300, an apparatus receives the positions measured by the GNSS receivers in the spatial configuration. The positions measured by the GNSS receivers can be sent over a wired or a wireless connection. Various wireless communication technologies that are known in the art may be used to couple the GNSS receiver to the apparatus. Examples are Bluetooth, 802.15.4, 802.11 or ZigBee based wireless communication technologies. Using these technologies, the positions measured can be sent over wireless mesh networks wherein the GNSS receivers are the nodes of the mesh network. Moreover, the positions measured can be sent over wide-area networks such as a telecommunications network. The position can be sent in real-time or can be measured during a specified time interval, such as a day or a week, and can be sent at the end of the time interval. In the latter case, noise can be averaged out of the measurement signal.

Second, in step 302, the apparatus obtains a map of planned positions of the GNSS receivers in the spatial configuration. The apparatus can obtain this map from a memory to which the processor within the apparatus is coupled but can also obtain this map from a network to which the processor is coupled. Various wireless communication technologies that are known in the art may be used to couple the processor to the network. Examples are Bluetooth, Wi-Fi or ZigBee. Any information that is available in the network can be retrieved.

Third, the apparatus compares the positions measured by the GNSS receivers with the planned positions of the GNSS receivers to, in step 304, identify the difference between the measured positions and the planned positions and finally, in step 306, it compensates the measured positions for this difference.

The compensation makes it possible to retrieve the actual position of the GNSS receivers when the GNSS receivers are placed on the planned positions. This can be done by a user through a user interface but the actual positions of the GNSS receivers can also be sent to another device or can be used as input for a computer program.

There are multiple possibilities to implement the compensation. Two examples are given.

First, one could implement the compensation by mapping every measured position on a planned position. The direction of the compensation can be determined by observing all measured positions and subsequently for every measured point an individual compensation can be determined. It is possible that not all measured positions map well on the planned positions as some GNSS receivers may be placed incorrectly. By determining the average compensated distance and finding the GNSS whose compensated distance exceeds the average compensated distance by a pre-determined threshold, incorrectly placed GNSS receivers can be identified. Additionally, this average compensation can be used to determine a minimum compensation that has to be implemented.

In the above implementation one could implement a minimum percentage of measured positions that have to match the planned positions. This can be related to how likely it is that GNSS receivers are placed on their planned positions. This first implementation improves the spatial accuracy of the GNSS receivers as it either places the measured positions of the GNSS receivers on their actual positions for correctly placed GNSS receivers or it determines the most likely positions for GNSS receivers that are not placed correctly.

A second possible implementation is one where the compensation is determined by reducing the average absolute difference or the sum of absolute differences between the compensated positions and the planned positions. In this case, all measured positions are compensated equally. This compensation could be determined by minimizing at the difference between planned and compensated positions. This second implementation improves the spatial accuracy by decreasing the average error of the GNSS receivers.

Also in this implementation it is possible that GNSS receivers are placed incorrectly. To account for this, one could define a percentage of the GNSS receivers that have to be taken into account when minimizing the error after compensation. In this manner any outliers resulting from incorrect placement do not contribute to the shift. It is also possible to set a maximum acceptable difference between planned and compensated position. The processor subsequently determines which measured positions can be compensated to obtain such a difference. Then, the measured positions that cannot be compensated to obtain such a difference correspond to incorrectly placed GPS receivers.

Examples of apparatuses that can be used for implementing the invention are for example computers, smartphones, laptops, tablets and wearable electronics. Additionally, the apparatus can be incorporated in a GNSS receiver.

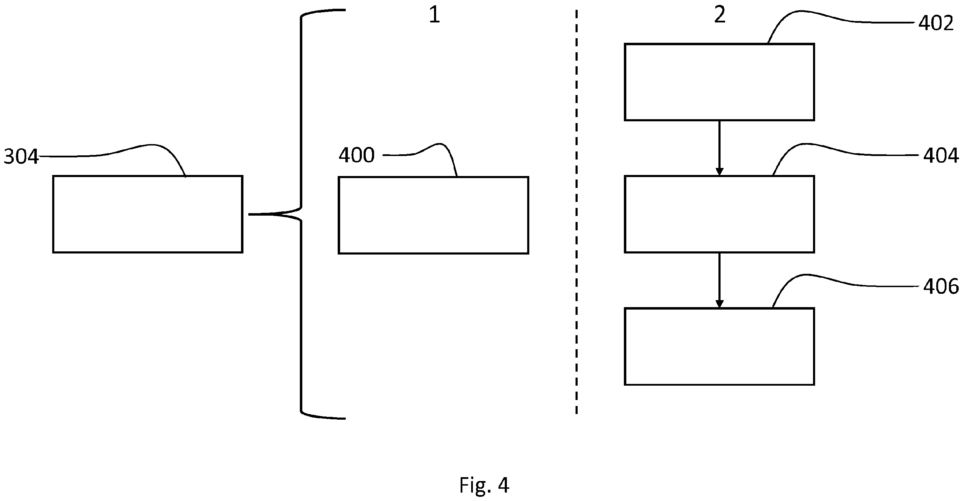

Fig. 4 illustrates two examples of methods used, in step 304, to identify the difference between the measured and the planned positions. The first method comprises machine performed pattern recognition 400 for determining a match between the spatial configuration of measured positions and the spatial configuration of planned positions and for determining a shift required to cause an overlap of the matching spatial configurations that is indicative of the difference.

Machine performed pattern recognition is well known in the art and can be performed on processors. Pattern matching algorithms may, in addition to minimizing the error metric also take into account distinguishing features; such as sides or corners of the spatial configuration and/or unique patterns in the spatial configuration to further improve the pattern matching. It is possible that the processor of the apparatus does not have sufficient processing power to perform the pattern recognition. In this case, the processor could be coupled to an apparatus with more processing power such that the pattern recognition can be performed externally. When the shift required to cause an overlap of the matching spatial configurations that is indicative of the difference between the measured positions and the planned position is determined, data on this shift could be sent back to the original processor which can compensate the measured positions for the difference. The external processor with superior processing power could however also determine the compensated positions itself and sent those back to the original processor. Machine performed pattern recognition can be used for both implementation of the compensation described above. Both implementation need different algorithms.

A second example of a method that identifies the difference between the measured positions and the planned positions is the following. First, in step 402, the apparatus, now coupled to a display, displays the spatial configuration of measured positions as well as the spatial configuration of planned positions. Then, in step 404, the apparatus is manually controlled to shift at least one of the spatial configurations to cause an overlap of the spatial configurations on the display. Finally, in step 406, the compensation is determined on the basis of the shift of at least one spatial configuration.

The display can be implemented as, but is not limited to, a television, a computer monitor, a beamer screen, a laptop screen, a tablet screen and a smartphone screen. The apparatus can be coupled to the display using both wired and wireless techniques. The manual control of the display can be implemented as, but not limited to, touch control of the display, control of the display using a keyboard and or a mouse and gesture based control of the display.

The display and manual compensation of the measured positions of GNSS receivers can be used to indicate which GNSS receivers are incorrectly placed, determine the percentage of correctly placed GNSS receivers and is especially useful for the first implementation described above.

The disclosed invention can be used to detect if GNSS receivers are placed according to their plan. When the processor obtains a map of relative positions, it can map the measured positions on this map. If the measured positions of most GNSS receivers in the spatial configuration map correctly on the map of planned positions, one can conclude that the GNSS receivers that do not map well are not placed according to plan. This can be implemented similar to the compensation implementations above. The key difference is that now only a map of relative positions needs to be available; the latter thus allows disambiguation of the respective GNSS receivers without knowledge of their absolute location.

The invention disclosed can be used when the GNSS receivers are placed on an object. Then, in step 300, the apparatus not only receives the positions measured by the GNSS receivers but also receives object specific identifiers. By combining the compensated positions of the GNSS receivers with the object specific identifiers, a compensated position can be determined for every object. This results in information on which specific object, with which identifier is placed on which position.

These objects can be implemented as, but are not limited to, poles, flag poles, buoys, trees and rocks. Said object can, for example, indicate a track for racing, hiking or cycling. The object specific identifier can be sent to the apparatus by the GNSS receiver but can also be sent by an external module that it is coupled to the object. The object specific identifier is sent in such a way that it is clear for the apparatus receiving the identifier to which measured GNSS receiver the object specific identifier corresponds. The disclosed invention is especially useful when, for example, a hiking/walking track is installed consisting of poles of different colors. In order to make the map for the walker, a person needs to know the order in which the poles are planted. The installer did however not note this down. Now, the invention disclosed can be used to make the map when information on which object specific identifier corresponds to which color is available.

It is also possible that the object is controllable such as a luminaire, a windmill or a solar panel. Now, the apparatus is configured to control the controllable object. This can be used, for example, in the case of a large field of solar panels to turn off the solar panels residing in shady areas. Additionally, in the case of luminaires, it can be favorable to control a luminaire based on its surrounding, in particular when such illumination should follow a particular spatial distribution; the exact location of the luminaire becomes relevant.

The controllable objects can also have sensor that sends information to the apparatus. Then, the objects can be controlled based on the information originating from their sensors and based on their compensated positions.

The sensors can be implemented as, but are not limited to, wind speed sensors, light sensors, presence sensors, temperature sensors and pressure sensors. The information gained by sensors can be sent to the apparatus by the GNSS receiver, an external module or the sensor itself. Examples of embodiments using this feature are, for example, that a presence sensor on a luminaire in a deserted alley can trigger only one luminaire whereas a presence sensor on a luminaire in a busy shopping boulevard can trigger multiple luminaires or even induce a special light effect. Another example is that a windmill is controlled on basis of the wind speed it senses and its position. This can be used to control the maximum rotation speed of the windmill. Hereby controlling, the wind speeds and win direction incident on windmills in the vicinity of the controlled windmill.

In a specific embodiment, the controllable apparatus is an outdoor luminaire. When installing a set of outdoor luminaires it is not clear which luminaire is placed on which position on which street. The invention disclosed can be used to determine where an outdoor luminaire is placed exactly and this can be then used in the commissioning process. For example the brightness of the luminaire can be set according to its position on the map. Also, the compensated positions can be used to distinguish which power cables control which luminaire and in the case of smart outdoor luminaire system can be used to control more specific settings such as, for example, the hold time when presence is detected. The outdoor luminaires can be connected in a network through Power over Ethernet systems or a variety of wireless systems. This network can be used to exchange information such as, but not limited to, the energy usage, the condition and the controls of the luminaire.

In various implementations, a processor may be associated with one or more storage media (generically referred to herein as "memory," e.g., volatile and non-volatile computer memory such as RAM, PROM, EPROM, and EEPROM, floppy disks, compact disks, optical disks, magnetic tape, USB sticks, SD cards and Solid State Drives, etc.). In some implementations, the storage media may be encoded with one or more programs that, when executed on one or more processors, perform at least some of the functions discussed herein. Various storage media may be fixed within a processor or may be transportable, such that the one or more programs stored thereon can be loaded into a processor so as to implement various aspects of the present invention discussed herein.

The terms "program" or "computer program" are used herein in a generic sense to refer to any type of computer code (e.g., software or microcode) that can be employed to program one or more processors or controllers.

It should be appreciated that all combinations of the foregoing concepts and additional concepts discussed are contemplated as being part of the inventive subject matter disclosed herein. In particular, all combinations of claimed subject matter appearing at the end of this disclosure are contemplated as being part of the inventive subject matter disclosed herein.

## Claims

1. A method of commissioning a plurality of outdoor luminaires by improving spatial accuracy of positions measured (200) by a plurality of Global Navigation Satellite System (GNSS) receivers (202) that are placed on a respective outdoor luminaire of said plurality of luminaires and that are statically placed in a spatial configuration (204) covering an area in which a deviation of a measured position from an actual position of each GNSS receiver is in the same direction, the method comprising:
receiving (300) the positions measured by each of the plurality of GNSS receivers in the spatial configuration;
obtaining (302) a map of planned positions of each of the plurality of GNSS receivers in the spatial configuration;
comparing the spatial configuration of measured positions of the plurality of GNSS receivers with the spatial configuration of planned positions of the plurality of GNSS receivers to identify (304) the difference (206) between the measured positions and the planned positions; and
compensating (306) the measured positions for the difference by mapping each measured position on a respective planned position;
determining an average compensated distance of the plurality of GNSS receivers based on said compensating;
identifying an incorrectly placed GNSS receiver by finding a GNSS receiver exceeding said average compensated distance by a pre-determined threshold.

2. The method of claim 1 where the method of identifying (304) the difference comprises machine performed pattern recognition (400) for determining a match between the spatial configuration of measured positions and the spatial configuration of planned positions and for determining a shift, indicative of the difference, for use in the compensation to cause an overlap of the matching spatial configurations.

3. The method of claim 1 where the method of identifying (304) the difference comprises:
displaying (402) the spatial configuration of measured positions as well as the spatial configuration of planned positions;
manually shifting (404) at least one of the spatial configurations to cause an overlap of the spatial configurations on the display; and
determining (406) the compensation on the basis of the shift of at least one spatial configuration.

4. The method of claim 1, wherein a map of planned relative positions of the GNSS receivers in the spatial configuration is obtained and wherein the difference between the measured positions and the planned positions is identified based on said map.

5. The method of claim 1, further comprising:
receiving outdoor luminaire-specific identifiers; and
combining the compensated measured positions of the GNSS receivers with the outdoor luminaire-specific identifiers to determine a compensated position for each outdoor luminaire.

6. The method of claim 5 wherein an outdoor luminaire is controllable, further comprising: controlling the outdoor luminaire based on its compensated position.

7. The method of claim 5, wherein at least one outdoor luminaire has at least one sensor, further comprising: controlling an outdoor luminaire based on data originating from the sensor in combination with the compensated positions of the plurality of outdoor luminaires.

8. The method of anyone of claims 6 and 7, further comprising: using the compensated positions of an outdoor luminaire for commissioning purposes.

9. An apparatus comprising:
a processor, coupled to a plurality of GNSS receivers (202) placed on a respective outdoor luminaire of a plurality of outdoor luminaires and that are statically placed in a spatial configuration (204), for receiving (300) positions (200) measured by the GNSS receivers, wherein the processor is configured to:
- receive the positions measured by each of the plurality of GNSS receivers in the spatial configuration;
- obtain a map of planned positions of each of the plurality of GNSS receivers in the spatial configuration (204),
- compare the spatial configuration of measured positions by the plurality of GNSS receivers with the spatial configuration of planned positions of the plurality of GNSS receivers to identify a difference (206) between the measured positions and the planned positions and
- to compensate the measured positions for the difference by mapping each measured position on a respective planned position;
- determine an average compensated distance of the plurality of GNSS receivers based on said compensating;
- identify an incorrectly placed GNSS receiver by finding a GNSS receiver exceeding said average compensated distance by a pre-determined threshold..

10. The apparatus of claim 9 wherein the processor is configured to perform a pattern recognition algorithm (400) for determining a match between the spatial configuration of measured positions (200) and the spatial configuration (204) of planned positions (202) and the processor is configured to determine a shift required to cause an overlap of the matching spatial configurations that is indicative of the difference (206) between the measured positions and the planned positions.

11. The apparatus of claim 9, wherein the processor is coupled to said plurality of outdoor luminaires for receiving outdoor luminaire-specific identifiers and wherein the processor is configured to combine the compensated measured positions of the GNSS receivers with the outdoor luminaire-specific identifiers to determine the compensated position for each outdoor luminaire.

12. The apparatus of claim 11, wherein the plurality of outdoor luminaires are controllable, wherein the processor is coupled to the plurality of outdoor luminaires for controlling the plurality of outdoor luminaires and wherein the processor is configured to control the plurality of outdoor luminaires based on their compensated positions.

13. A computer program product comprising instructions for commissioning a plurality of outdoor luminaires by improving spatial accuracy of positions (200) measured by a plurality of Global Navigation Satellite System (GNSS) receivers (202) placed on a respective outdoor luminaire of said plurality of luminaires and statically placed in a spatial configuration (204), the computer program product being downloadable from a communication network and/or stored on a computer readable medium, the computer program product comprising machine readable instructions that, when executed on a computing system, causes the computing system to perform the steps of:
- processing received positions measured by each of the plurality of GNSS receivers in the spatial configuration,
- determining a planned position for each GNSS receiver of the plurality of GNSS receivers,
- comparing the spatial configuration of measured positions of the plurality of GNSS receivers with a spatial configuration of planned positions of the plurality of GNSS receivers to identify the difference (206) between the measured positions and the planned positions and
- compensating the measured positions for the difference by mapping each measured position on a respective planned position;
determining an average compensated distance of the plurality of GNSS receivers based on said compensating;
identifying an incorrectly placed GNSS receiver by finding a GNSS receiver exceeding said average compensated distance by a pre-determined threshold..

14. The computer program product of claim 13 further arranged to perform the step of:
- identifying the difference (206) between the measured positions (200) the planned positions (202) of the GNSS receivers using pattern recognition (400).

15. The computer program product of claim 13 further arranged to perform the step of identifying the difference (206) between the measured positions (200) the planned positions (202) of the GNSS receivers by:
- displaying (402) the a spatial configuration (204) of the planned positions (202) and a spatial configuration of the measured positions (200) on a display device,
- enabling a manually controlled shift (404) of at least one of the spatial configurations to cause an overlap of the spatial configurations, and
- determining (406) the compensation on the basis of the shift of at least one spatial configuration.

## Patentansprüche

1. Verfahren zur Inbetriebnahme einer Vielzahl von Außenleuchten durch Verbesserung räumlicher Genauigkeit von Positionen, welche von mehreren Empfängern (202) eines Globalen Navigationssatellitensystems (GNSS) gemessen werden (200), die auf einer jeweiligen Außenleuchte dieser Vielzahl von Leuchten platziert sind und die statisch in einer räumlichen Konfiguration (204) platziert sind, die einen Bereich umfasst, in dem eine Abweichung einer gemessenen Position von einer tatsächlichen Position jedes GNSS-Empfängers in der gleichen Richtung verläuft, wobei das Verfahren beinhaltet, dass:
die von jedem der mehreren GNSS-Empfänger in der räumlichen Konfiguration gemessenen Positionen empfangen werden (300);
eine Abbildung geplanter Positionen von jedem der mehreren GNSS-Empfänger in der räumlichen Konfiguration erhalten wird (302);
die räumliche Konfiguration gemessener Positionen der mehreren GNSS-Empfänger mit der räumlichen Konfiguration geplanter Positionen der mehreren GNSS-Empfänger verglichen wird, um die Differenz (206) zwischen den gemessenen Positionen und den geplanten Positionen zu identifizieren (304); und
die gemessenen Positionen für die Differenz durch Abbilden jeder gemessenen Position auf einer jeweiligen geplanten Position ausgeglichen werden (306);
eine durchschnittlich ausgeglichene Distanz der mehreren GNSS-Empfänger auf der Grundlage dieses Ausgleichens ermittelt wird;
ein unkorrekt platzierter GNSS-Empfänger durch Ermitteln eines GNSS-Empfängers, der diese durchschnittlich ausgeglichene Distanz um einen vorher festgelegten Schwellenwert überschreitet, identifiziert wird.

2. Verfahren nach Anspruch 1, wobei das Verfahren zur Identifizierung (304) der Differenz eine maschinell durchgeführte Mustererkennung (400) umfasst, um eine Übereinstimmung zwischen der räumlichen Konfiguration gemessener Positionen und der räumlichen Konfiguration geplanter Positionen zu ermitteln, und um eine für die Differenz indikative Verschiebung zur Verwendung bei der Kompensation zu ermitteln, um eine Überlappung der übereinstimmenden räumlichen Konfigurationen zu bewirken.

3. Verfahren nach Anspruch 1, wobei das Verfahren zur Identifizierung (304) der Differenz beinhaltet, dass:
die räumliche Konfiguration gemessener Positionen sowie die räumliche Konfiguration geplanter Positionen dargestellt wird (402);
mindestens eine der räumlichen Konfigurationen manuell verschoben wird (404), um eine Überlappung der räumlichen Konfigurationen auf dem Display zu bewirken; und
die Kompensation auf der Grundlage der Verschiebung von mindestens einer räumlichen Konfiguration ermittelt wird (406).

4. Verfahren nach Anspruch 1, wobei eine Abbildung geplanter relativer Positionen der GNSS-Empfänger in der räumlichen Konfiguration erhalten wird, und wobei die Differenz zwischen den gemessenen Positionen und den geplanten Positionen auf der Grundlage dieser Abbildung identifiziert wird.

5. Verfahren nach Anspruch 1, das weiterhin beinhaltet, dass
außenleuchtenspezifische Kennungen empfangen werden; und
die ausgeglichenen, gemessenen Positionen der GNSS-Empfänger mit den außenleuchtenspezifischen Kennungen kombiniert werden, um eine ausgeglichene Position für jede Außenleute zu ermitteln.

6. Verfahren nach Anspruch 5, wobei eine Außenleuchte steuerbar ist, wobei das Verfahren weiterhin beinhaltet, dass:
die Außenleuchte auf der Grundlage ihrer ausgeglichenen Position gesteuert wird.

7. Verfahren nach Anspruch 5, wobei mindestens eine Außenleuchte zumindest einen Sensor aufweist,
wobei das Verfahren weiterhin beinhaltet, dass:
eine Außenleuchte auf der Grundlage von, von dem Sensor stammenden Daten in Kombination mit den ausgeglichenen Positionen der Vielzahl von Außenleuchten gesteuert wird.

8. Verfahren nach einem der Ansprüche 6 und 7, das weiterhin beinhaltet, dass:
die ausgeglichenen Positionen einer Außenleuchte zu Zwecken der Inbetriebnahme verwendet werden.

9. Vorrichtung, umfassend:
einen Prozessor, der mit mehreren GNSS-Empfängern (202) gekoppelt ist, die auf einer jeweiligen Außenleuchte einer Vielzahl von Außenleuchten platziert sind und die statisch in einer räumlichen Konfiguration (204) platziert sind, um von den GNSS-Empfängern gemessene Positionen (200) zu empfangen (300), wobei der Prozessor so konfiguriert ist, dass er:
- die von jedem der mehreren GNSS-Empfänger gemessenen Positionen in der räumlichen Konfiguration empfängt;
- eine Abbildung geplanter Positionen von jedem der mehreren GNSS-Empfänger in der räumlichen Konfiguration (204) erhält;
die räumliche Konfiguration von, von den mehreren GNSS-Empfängern gemessenen Positionen mit der räumlichen Konfiguration geplanter Positionen der mehreren GNSS-Empfänger vergleicht, um eine Differenz (206) zwischen den gemessenen Positionen und den geplanten Positionen zu identifizieren; und
die gemessenen Positionen für die Differenz durch Abbilden jeder gemessenen Position auf einer jeweiligen geplanten Position ausgleicht;
eine durchschnittlich ausgeglichene Distanz der mehreren GNSS-Empfänger auf der Grundlage dieses Ausgleichens ermittelt;
einen unkorrekt platzierten GNSS-Empfänger durch Ermitteln eines GNSS-Empfängers, der diese durchschnittlich ausgeglichene Distanz um einen vorher festgelegten Schwellenwert überschreitet, identifiziert.

10. Vorrichtung nach Anspruch 9, wobei der Prozessor so konfiguriert ist, dass er einen Mustererkennungsalgorithmus (400) durchführt, um eine Übereinstimmung zwischen der räumlichen Konfiguration gemessener Positionen (200) und der räumlichen Konfiguration (204) geplanter Positionen (202) zu ermitteln, und der Prozessor so konfiguriert ist, dass er eine Verschiebung ermittelt, die erforderlich ist, um eine Überlappung der übereinstimmenden räumlichen Konfigurationen zu bewirken, die für die Differenz (206) zwischen den gemessenen Positionen und den geplanten Positionen bezeichnend ist.

11. Vorrichtung nach Anspruch 9, wobei der Prozessor mit dieser Vielzahl von Außenleuchten gekoppelt ist, um außenleuchtenspezifische Kennungen zu empfangen, und wobei der Prozessor so konfiguriert ist, dass er die ausgeglichenen, gemessenen Positionen der GNSS-Empfänger mit den außenleuchtenspezifischen Kennungen kombiniert, um die ausgeglichene Position für jede Außenleute zu ermitteln.

12. Vorrichtung nach Anspruch 11, wobei die Vielzahl von Außenleuchten steuerbar ist, wobei der Prozessor mit der Vielzahl von Außenleuchten gekoppelt ist, um die Vielzahl von Außenleuchten zu steuern, und wobei der Prozessor so konfiguriert ist, dass er die Vielzahl von Außenleuchten auf der Grundlage ihrer ausgeglichenen Positionen steuert.

13. Computerprogrammprodukt mit Instruktionen zur Inbetriebnahme einer Vielzahl von Außenleuchten durch Verbesserung räumlicher Genauigkeit von Positionen (200), die von mehreren Empfängern (202) eines Globalen Navigationssatellitensystems (GNSS) gemessen werden, die auf einer jeweiligen Außenleuchte dieser Vielzahl von Leuchten platziert sind und statisch in einer räumlichen Konfiguration (204) platziert sind, wobei das Computerprogrammprodukt von einem Kommunikationsnetzwerk herunterladbar ist und/oder auf einem computerlesbaren Medium gespeichert ist, wobei das Computerprogrammprodukt maschinenlesbare Instruktionen umfasst, die bei Ausführung derselben auf einem Computersystem dieses veranlassen, die folgenden Schritte auszuführen, wonach:
- empfangene Positionen, die von jedem der mehreren GNSS-Empfänger gemessen werden, in der räumlichen Konfiguration verarbeitet werden,
- eine geplante Position für jeden GNSS-Empfänger der mehreren GNSS-Empfänger ermittelt wird,
- die räumliche Konfiguration gemessener Positionen der mehreren GNSS-Empfänger mit einer räumlichen Konfiguration geplanter Positionen der mehreren GNSS-Empfänger verglichen wird, um die Differenz (206) zwischen den gemessenen Positionen und den geplanten Positionen zu identifizieren; und
die gemessenen Positionen für die Differenz durch Abbilden jeder gemessenen Position auf einer jeweiligen geplanten Position ausgeglichen werden;
eine durchschnittlich ausgeglichene Distanz der mehreren GNSS-Empfänger auf der Grundlage dieses Ausgleichens ermittelt wird;
ein unkorrekt platzierter GNSS-Empfänger durch Ermitteln eines GNSS-Empfängers, der diese durchschnittlich ausgeglichene Distanz um einen vorher festgelegten Schwellenwert überschreitet, identifiziert wird.

14. Computerprogrammprodukt nach Anspruch 13, das weiterhin so eingerichtet ist, dass es die folgenden Schritte ausführt, wonach:
- die Differenz (206) zwischen den gemessenen Positionen (200) und den geplanten Positionen (202) der GNSS-Empfänger unter Anwendung einer Mustererkennung (400) identifiziert wird.

15. Computerprogrammprodukt nach Anspruch 13, das weiterhin so eingerichtet ist, dass es den Schritt des Identifizierens der Differenz (206) zwischen den gemessenen Positionen (200) und den geplanten Positionen (202) der GNSS-Empfänger durchführt durch:
- Darstellen (402) einer räumlichen Konfiguration (204) der geplanten Positionen (202) und einer räumlichen Konfiguration der gemessenen Positionen (200) auf einer Anzeigeeinrichtung,
- Ermöglichen einer manuell gesteuerten Verschiebung (404) von mindestens einer der räumlichen Konfigurationen, um eine Überlappung der räumlichen Konfigurationen zu bewirken, sowie
- Ermitteln (406) des Ausgleichs auf der Grundlage der Verschiebung von mindestens einer räumlichen Konfiguration.

## Revendications

1. Procédé de mise en service d'une pluralité de luminaires extérieurs en améliorant la précision spatiale de positions mesurées (200) par une pluralité de récepteur du Système Global de Navigation par Satellite (GNSS) (202) qui sont placés sur un luminaire extérieur respectif de ladite pluralité de luminaires et qui sont placés de manière statique dans une configuration spatiale (204) couvrant une zone dans laquelle une déviation d'une position mesurée à partir d'une position actuelle de chaque récepteur GNSS est dans la même direction, la méthode comprenant les étapes consistant à :
recevoir (300) les positions mesurées par chacun de la pluralité des récepteurs GNSS dans la configuration spatiale ;
obtenir (302) une carte de positions prévues de chacun de la pluralité des récepteurs GNSS dans la configuration spatiale ;
comparer la configuration spatiale des positions mesurées de la pluralité de récepteurs GNSS avec la configuration spatiale des positions prévues de la pluralité de récepteurs GNSS pour identifier (304) la différence (206) entre les positions mesurées et les positions prévues ; et
compenser (306) la différence entre les positions mesurées en cartographiant chaque position mesurée sur une position prévue respective ;
déterminer une distance compensée moyenne de la pluralité de récepteurs GNSS sur la base de ladite étape de compensation ;
identifier un récepteur GNSS placé de manière incorrecte en trouvant un récepteur GNSS excédant ladite distance compensée moyenne au moyen d'un seuil prédéterminé.

2. Procédé selon la revendication 1 où le procédé d'identification (304) de la différence comprend une reconnaissance de formes exécutée par une machine (400) pour déterminer une concordance entre la configuration spatiale de positions mesurées et la configuration spatiale de positions prévues et pour déterminer un décalage, indicateur de la différence, pour une utilisation dans la compensation de façon à provoquer un chevauchement des configurations spatiales concordantes.

3. Procédé selon la revendication 1 où le procédé d'identification (304) de la différence comprend :
l'affichage (402) de la configuration spatiale de positions mesurées ainsi que de la configuration spatiale de positions prévues ;
le décalage manuel (404) d'au moins une des configurations spatiales pour provoquer un chevauchement des configurations spatiales sur l'écran ; et
la détermination (406) de la compensation sur la base du décalage d'au moins une configuration spatiale.

4. Procédé selon la revendication 1, dans lequel une carte des positions relatives prévues des récepteurs GNSS dans la configuration spatiale est obtenue et dans lequel la différence entre les positions mesurées et les positions prévues est identifiée sur la base de ladite carte.

5. Procédé selon la revendication 1, comprenant en outre :
la réception d'identificateurs spécifiques aux luminaires extérieurs ; et
la combinaison des positions mesurées compensées des récepteurs GNSS et des identificateurs spécifiques aux luminaires extérieurs pour déterminer une position compensée pour chaque luminaire extérieur.

6. Procédé selon la revendication 5 dans lequel un luminaire extérieur peut être commandé, comprenant en outre l'étape consistant à :
commander le luminaire extérieur sur la base de sa position compensée.

7. Procédé selon la revendication 5, dans lequel au moins un luminaire extérieur présente au moins un capteur,
comprenant en outre l'étape consistant à : commander un luminaire extérieur sur la base de données provenant du capteur en combinaison avec les positions compensées de la pluralité de luminaires extérieurs.

8. Procédé selon l'une quelconque des revendications 6 et 7,
comprenant en outre l'étape consistant à : utiliser les positions compensées d'un luminaire extérieur à des fins de mise en service.

9. Appareil comprenant :
un processeur, couplé à une pluralité de récepteurs GNSS (202) placés sur un luminaire extérieur respectif d'une pluralité de luminaires extérieurs et qui sont placés de manière statique dans une configuration spatiale (204), pour recevoir (300) des positions (200) mesurées par des récepteurs GNSS, dans lequel le processeur est configuré pour :
- recevoir les positions mesurées par chacun de la pluralité des récepteurs GNSS dans la configuration spatiale ;
- obtenir une carte de positions prévues de chacun de la pluralité des récepteurs GNSS dans la configuration spatiale (204),
- comparer la configuration spatiale des positions mesurées par la pluralité de récepteurs GNSS avec la configuration spatiale de positions prévues de la pluralité de récepteurs GNSS avec pour identifier une différence (206) entre les positions mesurées et les positions prévues et
- pour compenser la différence entre les positions mesurées en cartographiant chaque position mesurée sur une position prévue respective ;
- déterminer une distance compensée moyenne de la pluralité de récepteurs GNSS sur la base de ladite étape de compensation ;
- identifier un récepteur GNSS placé de manière incorrecte en trouvant un récepteur GNSS excédant ladite distance compensée moyenne au moyen d'un seuil prédéterminé.

10. Appareil selon la revendication 9 dans lequel le processeur est configuré pour exécuter un algorithme de reconnaissance de forme (400) pour déterminer une concordance entre la configuration spatiale de positions mesurées (200) et la configuration spatiale (204) de positions prévues (202) et le processeur est configuré pour déterminer un décalage requis pour provoquer un chevauchement des configurations spatiales concordantes qui est indicateur de la différence (206) entre les positions mesurées et les positions prévues.

11. Appareil selon la revendication 9, dans lequel
le processeur couplé à ladite pluralité de luminaires extérieurs pour recevoir des identificateurs spécifiques aux luminaires extérieurs et dans lequel le processeur est configuré pour combiner les positions mesurées compensées des récepteurs GNSS et les identificateurs spécifiques aux luminaires extérieurs pour déterminer la position compensée pour chaque luminaire extérieur.

12. Appareil selon la revendication 11, dans lequel la pluralité de luminaires extérieurs peuvent être commandés, dans lequel le processeur est couplé à la pluralité de luminaires extérieurs pour commander la pluralité de luminaires extérieurs et dans lequel le processeur est configuré pour commander la pluralité de luminaires extérieurs sur la base de leurs positions compensées.

13. Produit de programme d'ordinateur comprenant des instructions pour mettre en service une pluralité de luminaires extérieurs en améliorant la précision spatiale de positions (200) mesurées par une pluralité de récepteur du Système Global de Navigation par Satellite (GNSS) (202) placés sur un luminaire extérieur respectif de ladite pluralité de luminaires et placés de manière statique dans une configuration spatiale (204), le produit de programme d'ordinateur pouvant être téléchargé à partir d'un réseau de communication et/ou stocké sur un moyen lisible par ordinateur,
le produit de programme d'ordinateur comprenant des instructions lisibles par machine qui, lorsqu'elles sont exécutées sur un système informatique, provoque l'exécution par le système informatique des étapes consistant à :
- traiter des positions reçues mesurées par chacun de la pluralité de récepteurs GNSS dans la configuration spatiale,
- déterminer une position prévue pour chaque récepteur GNSS de pluralité de récepteurs GNSS,
- comparer la configuration spatiale de positions mesurées de la pluralité de récepteurs GNSS avec une configuration spatiale de positions prévues de la pluralité de récepteurs GNSS pour identifier la différence (206) entre les positions mesurées et les positions prévues et
- compenser les positions mesurées par la différence en cartographiant chaque position mesurée sur une position prévue respective ;
déterminer une distance compensée moyenne de la pluralité de récepteur GNSS sur la base de ladite étape de compensation ;
identifier un récepteur GNSS placé de manière incorrecte en trouvant un récepteur GNSS excédant ladite distance compensée moyenne au moyen d'un seuil prédéterminé.

14. Produit de programme d'ordinateur selon la revendication 13 agencé en outre pour effectuer l'étape consistant à :
- identifier la différence (206) entre les positions mesurées (200) et les positions prévues (202) des récepteurs GNSS en utilisant la reconnaissance de formes (400).

15. Produit de programme d'ordinateur selon la revendication 13 agencé en outre pour effectuer l'étape d'identification de la différence (206) entre les positions mesurées (200) et les positions prévues (202) des récepteurs GNSS en :
- affichant (402) la une configuration spatiale (204) des positions prévues (202) et une configuration spatiale des positions mesurées (200) sur un dispositif d'affichage,
- permettant un décalage pouvant être commandé manuellement (404) d'au moins une des configurations spatiales pour provoquer un chevauchement des configurations spatiales, et
- déterminant (406) la compensation sur la base du décalage d'au moins une configuration spatiale.
